Europäisches Patentamt

European Patent Office

Office européen des brevets

(19)

(11) Numéro de publication: **0 248 707 B1**

# FASCICULE DE BREVET EUROPEEN

(45) Date de publication de fascicule du brevet:
20.03.91

(51) Int. Cl.⁵: **B60R 13/06**

(21) Numéro de dépôt: 87401163.8

(22) Date de dépôt: 22.05.87

(54) **Vitre pourvue d'une bande profilée rapportée sur sa zone marginale.**

(30) Priorité: 30.05.86 DE 3618278

(43) Date de publication de la demande:
09.12.87 Bulletin 87/50

(45) Mention de la délivrance du brevet:
20.03.91 Bulletin 91/12

(84) Etats contractants désignés:
**BE DE ES FR GB IT SE**

(56) Documents cités:
**CA-A- 936 564**
**CH-A- 194 919**
**DE-A- 2 235 858**

(73) Titulaire: **SAINT-GOBAIN VITRAGE INTERNA-TIONAL**
**18, avenue d'Alsace**
**F-92400 Courbevoie(FR)BE ES FR GB IT SE**

Titulaire: **VEGLA Vereinigte Glaswerke GmbH**
**Viktoriaallee 3-5**
**W-5100 Aachen(DE)DE**

(72) Inventeur: **Ohlenforst, Hans**
**Im Johannistal 7**
**W-5100 Aachen(DE)**
Inventeur: **Cornelis, Gerd-Ulrich**
**Dechant-Fabry strasse 48**
**W-5161 Merzenich-Girbelsrath(DE)**

(74) Mandataire: **Muller, René et al**
**SAINT-GOBAIN RECHERCHE 39, quai Lucien Lefranc**
**F-93304 Aubervilliers(FR)**

EP 0 248 707 B1

## Description

La présente invention concerne une vitre qui est pourvue, sur son pourtour, d'une bande profilée rapportée comportant une section de serviage ayant, en coupe, la forme d'un U, ou d'un encadrement profilé en matière à élasticité de ressort. Elle a trait en particulier à une vitre d'automobile pourvue d'un encadrement rapporté et destinée à être directement collée à l'aile de fixation de la baie de fenêtre de la carrosserie.

Des vitres peuvent être pourvues à diverses fins de profilés rapportés. Par exemple, des profilés rapportés peuvent servir de profilés de protection pour les bords fragiles du verre ou, pour des raisons purement esthétiques, ils peuvent simplement servir d'encadrement de la vitre. Des profilés rapportés de sections variées s'utilisent à grande échelle pour des vitres d'automobiles. Dans ce cas, de tels encadrements profilés peuvent servir directement à fixer les vitres dans des cadres de fenêtres. Lorsque la fixation des vitres dans les cadres de fenêtres s'effectue par collage direct à ces cadres, un encadrement profilé est en règle générale prévu sur le pourtour de la vitre pour encadrer cette vitre et combler l'interstice présent entre le bord de la vitre et le cadre de fenêtre.

Dans le cas de profilés rapportés comportant une section de fixation profilée en forme de U, il est souvent difficile d'obtenir une fixation durable sur le bord de la vitre. Des bandes profilées ou des encadrements en matière élastomère sont pour cette raison fréquemment fixés sur la vitre par intercalation d'un adhésif supplémentaire. Lorsqu'on utilise des profilés rapportés métalliques, il est également connu d'améliorer la fixation de solidalisation du profilé de serrage en munissant la surface du verre d'une garniture adhérente en un polymère très élastique, ce qui accroît sensiblement la friction d'adhérence.

Le document DE-A-2 235 858 décrit un vitrage isolant muni d'un profilé d'encadrement, et notamment un assemblage à épousement de formes entre le profilé d'encadrement et les deux parties extérieures d'un profilé de distance. Ce document ne décrit pas un profilé présentant une section de serrage en U, associé à un assemblage à épousement de formes.

Le document CA-A-936 564 décrit le montage sans épousement de formes d'une bande de protection sur une partie périphérique d'un vitrage.

L'invention a pour but d'assurer une amélioration sensible de l'adhérence de profilés de serrage ou rapportés présentant une section de serrage en forme de U et ce, en particulier, dans des cas dans lesquels, en raison de la matière dont les profilés sont constitués, les forces de serrage exercées restent insuffisantes. Il faut surtout éviter la nécessité d'un collage permanent supplémentaire de telle sorte que le profilé rapporté puisse, le cas échéant, être à nouveau séparé de la vitre.

Suivant l'invention, ce but est réalisé par le fait que, dans la zone marginale recouverte par la section de serrage de la bande profilée, au moins sur une surface de la vitre, est prévue une garniture à surface profilée, en une matière extrudée et durcie directement sur la vitre, et la section de serrage en forme de U de la bande profilée qui présente une élasticité de ressort suffisante pour le serrage, est pourvue, sur sa surface adjacente à la garniture, d'un profil correspondant à celui de la garniture de telle sorte qu'un assemblage à épousement de formes soit obtenu entre les ailes profilées de la section de serrage en ferme de U appliquées contre la vitre et la garniture profilée extrudée.

Dans un développement avantageux de l'invention, la vitre est pourvue des deux côtés d'une garniture profilée extrudée adhérant à demeure et les deux ailes de la section de serrage en forme de U de la bande profilée présentent un profil correspondant.

Le profit de la garniture adhérant à la surface du verre comporte avantageusement au moins une nervure qui s'étend parallèlement au bord de la vitre et qui, en coupe, a environ une forme en dents de scie.

Les profils prévus conformément à l'invention sur la garniture de la vitre et sur les ailes de la section de serrage du profilé, forment des structures superficielles imbriquées et, le cas échéant, taillées en "sapin" ou affouillées, qui s'accrochent l'une à l'autre, de sorte que les profilés sont alors rapportés d'une manière extraordinairement sûre sur le bord de la vitre tout en ne devant exercer que des forces de serrage relativement faibles.

D'autres détails de l'invention ressortiront des revendications et de la description suivante de divers exemples de réalisation, donnés avec référence aux dessins annexés, dans lesquels :

la Fig. 1 illustre la zone marginale d'une vitre monolithique munie d'une garniture conforme à l'invention;

la Fig. 2 illustre la zone marginale d'une vitre monolithique munie d'un profilé rapporté conforme à l'invention;

la Fig. 3 illustre la zone marginale d'une vitre en verre feuilleté munie d'un profile rapporté conforme à l'invention et d'un joint d'étanchéité supplémentaire pour la vitre en verre feuilleté au niveau de son bord;

la Fig. 4 illustre une autre forme d'exécution d'une bande profilée conforme à l'invention;

la Fig. 5 illustre une vitre d'automobile collée au cadre de fenêtre d'une carrosserie de véhicule et munie d'un encadrement profilé conforme à l'invention, et

la Fig. 6 illustre une autre forme d'exécution d'une vitre d'automobile conforme à l'invention collée au cadre de fenêtre d'une carrosserie de véhicule.

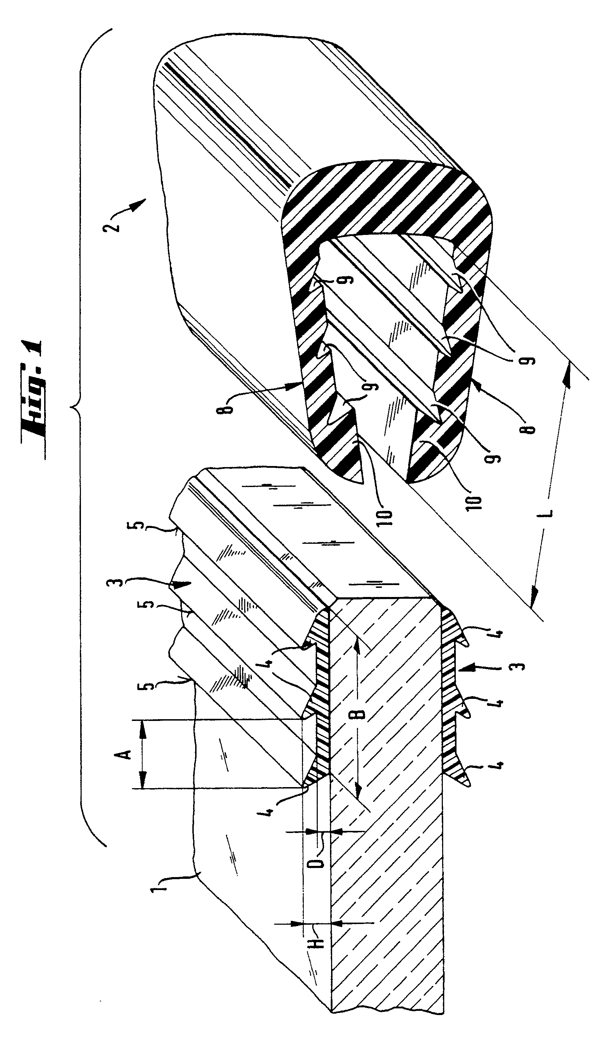

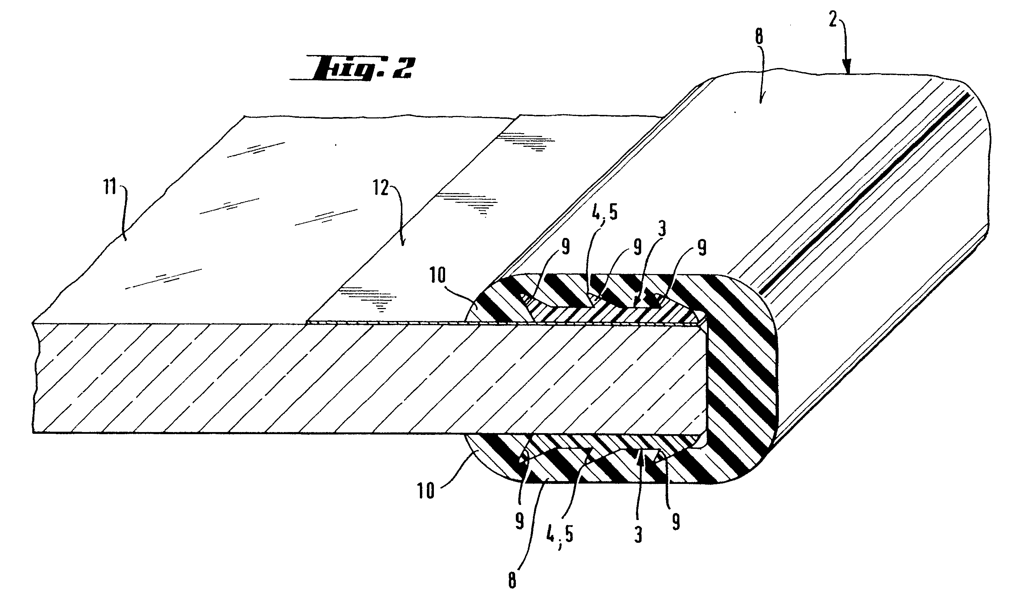

Les vitres 1, 11 représentées sur les Fig. 1 et 2 sont des vitres monolithiques en verre silicaté, qui doivent être pourvues ou sont pourvues le long d'un de leurs bords ou sur toute leur périphérie d'un profilé de serrage rapporté 2. Dans le cas du profilé de serrage 2, il s'agit en particulier d'une bande profilée ou d'un encadrement profilé en une matière plastique adéquate. Le profilé de serrage peut être fait d'une matière plastique dure ou souple et, par exemple, aussi d'une matière plastique élastomère comme du EPDM, qui est habituellement utilisé pour encadrer et installer des vitres d'automobiles.

La vitre 1, 11 est pourvue dans sa zone marginale, sur une largeur B légèrement inférieure à la longueur L de l'aile du profilé de serrage 2, d'une garniture profilée adhérente 3. Dans l'exemple représenté, la garniture 3 est disposée sur les deux faces de la vitre 1, 11, mais il est aussi possible de ne prévoir la garniture profilée 3 que sur une face de la vitre 1, 11.

La garniture 3 a, en coupe, un profil à peu près en dents de scie. Dans le cas représenté, la garniture 3 présente, en coupe, trois saillies en forme de dents de scie 4, qui forment des nervures 5 parallèles au bord de la vitre. Les saillies 4 ou nervures 5 sont mutuellement espacées d'une distance A de 1 à 5 mm. Les nervures 5 en forme de dents de scie, en coupe, sont inclinées légèrement vers l'intérieur de la surface de la vitre, de sorte qu'elles offrent des possibilités d'ancrage particulièrement efficaces pour le profilé rapporté. L'épaisseur D de la couche de base de la garniture 3 est, par exemple, d'environ 0,5 à 1 mm, tandis que la hauteur H des nervures 5, mesurée depuis la surface du verre, est d'environ 1 à 2 mm.

Les nervures d'ancrage 5 sont représentées aux dessins avec un bord relativement en pointe, de sorte que les saillies 4 représentées en coupe ont la forme de dents de scie accusées. Les nervures 5 sont cependant tout aussi efficaces si les bords sont plus ou moins arrondis. Les cannelures 9 dans les bandes profilées 2 correspondant aux nervures 5 et constituant avec celles-ci des assemblages à épousement de forme, peuvent présenter des bords arrondis de manière correspondante.

A titre de matière pour la garniture profilée 3, on peut utiliser des matières adhésives extrudables qui adhèrent bien à la vitre 1 et dont la structure profilée persiste après leur application et leur durcissement. On obtient de bons résultats avec des colles de polyuréthane à deux composants et avec des colles de polyuréthane à un seul composant durcissant au contact de l'humidité, telles qu'elles sont décrites en compagnie de compositions pour couches de fond dans le document US-PS 3 779 794. Ces matières adhésives peuvent être appliquées sans difficulté à l'aide d'une buse d'extrusion profilée de manière correspondante sur la zone marginale de la vitre, étant entendu que l'application simultanée des deux garnitures 3 sur les deux faces de la vitre opposées l'une à l'autre peut être effectuée sans plus à l'aide d'une buse d'extrusion unique de forme correspondante. Selon la matière durcissante utilisée pour la garniture 3, un prétraitement de la surface du verre, comme par exemple un nettoyage et/ou l'application d'une couche de fond, est nécessaire ou avantageux, et à cet effet on utilise les matières connues et, le cas échéant prescrites pour les diverses matières adhésives.

Le profilé de serrage 2 a la forme d'un profilé en U, mais peut bien entendu présenter n'importe quelle autre forme en coupe, pour autant qu'il comprenne une section ayant, en coupe, la forme d'un U, au moyen de laquelle il peut être rapporté ou serré sur la zone marginale de la vitre. Il peut essentiellement être fait de n'importe quelle matière, étant entendu qu'il est simplement nécessaire que la matière présente une élasticité de ressort minimum ou une capacité de reprise de forme telle que les ailes du profilé de serrage ne s'écartent pas l'une de l'autre. Les matières les plus diverses sont particulièrement adéquates à cet effet. Au cas où on utilise des matières élastomères comme du EPDM ou d'autres caoutchoucs synthétiques ou polymères élastomères qui, grâce à leurs propriétés élastomères, remplissent également des fonctions d'étanchéité à l'égard de cadres ou d'éléments adjacents, de telles bandes ou encadrements profilés peuvent aussi être pourvus d'une armature métallique qui confère l'élasticité de ressort nécessaire aux profilés de serrage.

Les bandes profilées 2 sont de préférence fabriquées par extrusion. Les ailes 8 présentent, sur leurs faces internes un profil, à savoir des cannelures 9, correspondant, en coupe, à la section des nervures 5 de la garniture 3. A leur extrémité antérieure, les ailes 8 sont pourvues d'une lèvre d'étanchéité 10 qui s'applique, au-delà de la garniture 3, tout contre la surface de la vitre 1. Les cannelures 9 sont orientées et taillées en sapin ou affouillées d'une manière telle que la mise en place par glissement de la bande profilée 2 sur la zone marginale de la vitre s'effectue relativement sans difficulté grâce aux nervures 5 inclinées dans le même sens, tandis que lors d'une tentative d'arracher la bande profilée de la vitre, les nervures faisant office de barbillons 5 s'accrochent solidement aux cannelures 9 de la bande profilée.

Alors que la vitre 1 représentée sur la Fig. 1, après la mise en place de la bande profilée 2, peut être utilisée dans tous les cas où un profilé de protection de bord est nécessaire, la Fig. 2 illustre une vitre 11 qui convient, en particulier, pour le vitrage permanent par collage direct, par exemple d'une carrosserie d'automobile. Dans le cas de cette vitre 11, une surface du verre, en particulier la surface qui vient en contact avec la matière adhésive, présente, le long de la périphérie de la vitre, dans la zone marginale de celle-ci, une couche 12 en forme de cadre opaque, par exemple de quelques centimètres de largeur, faite d'une peinture-émail ou d'une autre peinture adhérant à demeure à la surface du verre. Cette couche 12 est destinée à masquer la couche d'adhésif et à la protéger contre le rayonnement solaire ou contre le rayonnement ultraviolet. La configuration de la garniture profilée 3 et du profilé de serrage 2 correspond à celle de la forme d'exécution décrite avec référence à la Fig. 1.

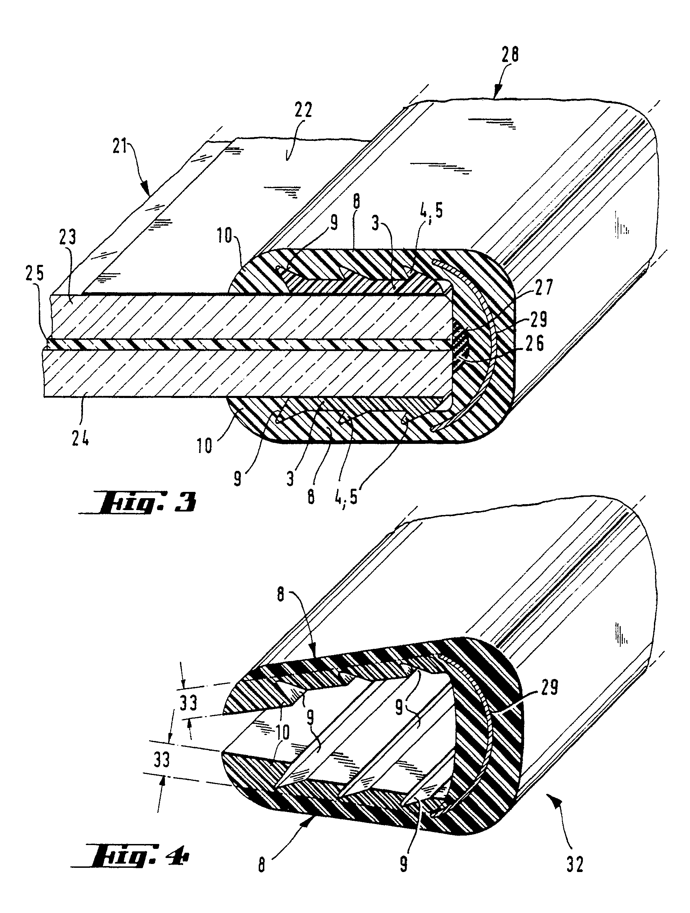

La Fig. 3 illustre également une forme d'exécution qui convient dans le cas d'une vitre d'automobile. La vitre 21 est, dans ce cas, une vitre en verre feuilleté qui est formée des deux feuilles de verre individuelles 23, 24 et de la couche de matière plastique 25 en butyral polyvinylique qui relie ces deux feuilles de verre l'une à l'autre. Pour protéger la couche de butyral polyvinylique 25 contre d'éventuelles infiltrations d'humidité, l'étanchéité de la vitre en verre feuilleté 21 est assurée tout autour de son bord par une matière d'étanchéité 26. La matière d'étanchéité 26 est insérée, par exemple sous la forme d'un cordon de butyle, dans un évidement périphérique 27 ménagé à l'intérieur de l'âme médiane de l'encadrement profilé. Lorsque l'encadrement profilé 28 est mis en place sur la zone marginale de la vitre 21, le cordon de butyle est aplati et s'applique étroitement contre la surface périphérique des deux feuilles de verre 23, 24 en assurant l'étanchéité de la couche de butyral polyvinylique 25. Dans sa zone marginale, la vitre en verre feuilleté 21 présente à nouveau une couche d'encadrement 22 faite d'une peinture imperméable au rayonnement, en particulier d'une peinture-émail. La garniture profilée 3 sur la vitre en verre feuilleté 21 correspond, dans sa réalisation, à celle décrite à propos de la Fig. 1, et il en va de même pour le profil intérieur des deux ailes de l'encadrement profilé 28 qui coopèrent par épousement de forme, avec la garniture 3. L'encadrement profilé 28 est pourvu d'une pièce métallique insérée 29 qui assure la pression de compression nécessaire des ailes de l'encadrement profilé 28.

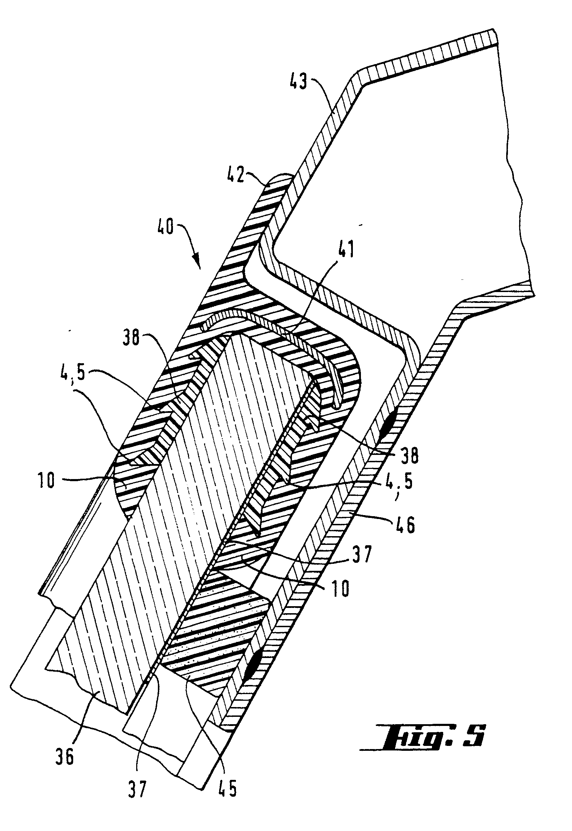

Dans le cas de l'encadrement profilé 32 représenté sur la Fig. 4, la configuration géométrique du profilé est à nouveau comparable à celle de la bande ou de l'encadrement profilé décrit plus haut.

Contrairement aux formes d'exécution décrites jusqu'à présent, cet encadrement profilé 32 présente cependant une dureté qui varie localement. Ainsi, par exemple, la dureté Shore dans les zones profilées 33 est relativement élevée pour éviter une déformation du profil et garantir un ancrage sûr et durable à la garniture profilée prévue sur la vitre. Les autres zones extérieures du profilé présentent, par contre, une dureté Shore relativement faible, de telle sorte que le profilé puisse remplir convenablement sa fonction d'étanchéité, par exemple à l'égard d'un cadre adjacent.

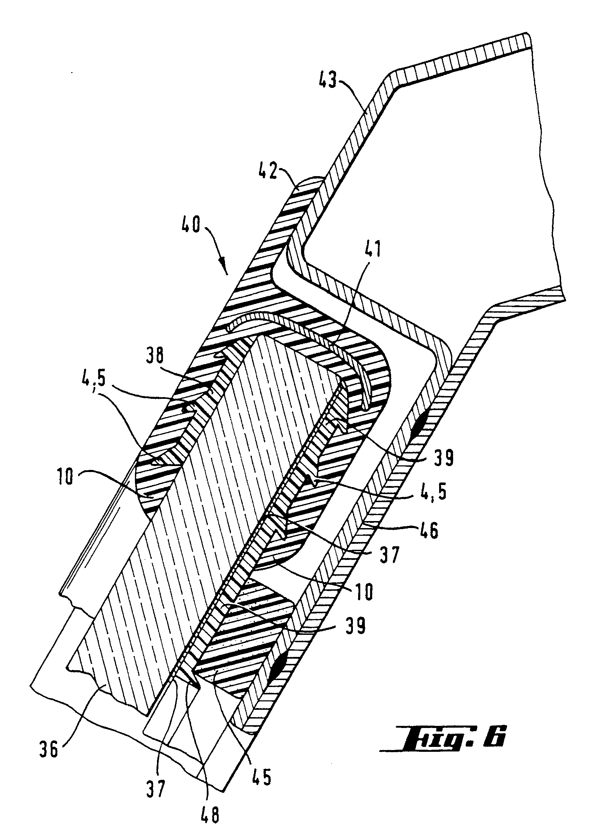

La Fig. 5 représente une vitre d'automobile à l'état monté, qui est pourvue d'une variante d'encadrement profilé. La vitre 36, qui peut comprendre une vitre en verre de sécurité à une seule épaisseur ou une vitre en verre feuilleté est pourvue, du côté tourné vers l'habitacle du véhicule, d'une couche d'encadrement 37 en une peinture-émail. Sur cette couche 37 et du côté opposé de la vitre est collée à demeure une garniture profilée 38 présentant un profil ayant, en coupe, une forme en dents de scie. L'encadrement profilé 40, qui est par exemple en EPDM, est à nouveau pourvu intérieurement d'un profil qui coopère avec épousement de forme avec le profil de la garniture 38. Pour accroître la force de serrage nécessaire, une pièce métallique insérée 41 est prévue dans l'encadrement profilé 40. L'encadrement profilé 40 est pourvu d'une lèvre d'étanchéité 42 qui s'applique contre le cadre 43 de la carrosserie du véhicule entourant la vitre. La jonction de la vitre 36 avec le cadre de fenêtre de la carrosserie s'effectue par l'intermédiaire du cordon d'adhésif 45, qui est intercalé entre la vitre 36 et l'aile de fixation 46 du cadre de fenêtre.

La forme d'exécution représentée sur la Fig. 6 correspond à la forme d'exécution décrite avec référence à la Fig. 5, à l'unique exception près que la garniture 39 appliquée sur la face interne de la vitre sur la couche opaque aux rayons lumineux 37 présente une extension en largeur telle qu'elle s'étende jusqu'au-delà du cordon d'adhésif 45. Sur cette extrémité, la garniture 39 est pourvue d'un rebord de limitation 48. Ce rebord de limitation 48 a pour tâche d'empêcher la matière adhésive du cordon d'adhésif 45 d'être refoulée dans le champ de vision de la vitre et ainsi de devenir visible lorsque la vitre est pressée contre l'aile de fixation 46. La garniture 39 peut, dans ce cas, être faite d'une manière particulièrement avantageuse de la même colle de polyuréthanne à un seul composant durcissant au contact de l'humidité que le cordon d'adhésif 45. Un prétraitement particulier de la vitre avant montage devient de cette façon superflu car la matière adhésive du cordon d'adhésif 45 adhère directement à la garniture 39. Compte non tenu du rebord de limitation 48, la garniture 39 ne doit être profilée que dans la zone coopérant avec l'encadrement profilé 40.

## Revendications

1. vitre qui est pourvue, sur son pourtour, d'une bande profilée comportant une section de serrage ayant, en coupe, la forme d'un U, la vitre étant destinée en particulier à être collée au cadre de fenêtre d'une carrosserie d'automobile, caractérisée en ce que, dans la zone marginale recouverte par la section de serrage en forme de U de la bande profilée (2, 28, 32, 40), au moins sur une surface de la vitre (1, 11, 21, 36) est prévue une garniture (3, 38, 39) à surface profilée, en une matière extrudée et durcie directement sur la vitre, et la section de serrage n forme de U de la bande profilée (2, 28, 32, 40) qui présente une élasticité de ressort suffisante pour le serrage, est pourvue, sur sa surface adjacente à la garniture (3, 38, 39), d'un profil correspondant à celui de la garniture (3, 38, 39) de telle sorte qu'un assemblage à épousement de formes soit obtenu entre les ailes profilées de la section de serrage en forme de U appliquées contre la vitre et la garniture profilée extrudée (3, 38, 39).

2. Vitre suivant la revendication 1, caractérisée en ce que le profil de la garniture (3, 38, 39) adhérant à demeure à la vitre est constitué d'au moins une nervure (5) parallèle au bord de la vitre, qui, en coupe, a environ une forme en dent de scie.

3. Vitre suivant la revendication 1 ou 2, caractérisée en ce que les profils ou nervures (5) forment des affouillements derrière lesquels s'accrochent les saillies correspondantes des cannelures (9) de la section de serrage en forme de U de la bande profilée (2) ou de l'encadrement profilé (28, 40).

4. Vitre suivant la revendication 3, caractérisée en ce que la garniture (3, 38, 39) est faite d'une colle de polyuréthane telle qu'une colle de polyuréthane à un seul composant durcissant au contact de l'humidité ou d'une colle de polyuréthane à deux composants.

5. Vitre suivant l'une quelconque des revendications 1 à 4, caractérisée en ce que la garniture (3, 38, 39) a une épaisseur de 0,5 à 2 mm et le profil a une profondeur de 0,5 à 1,5 mm.

6. Vitre suivant l'une quelconque des revendications 1 à 5, caractérisée en ce que la bande profilée (2) et l'encadrement profilé (28, 32, 40) sont faits d'un polymère, en particulier d'un polymère caoutchouteux comme du EPDM.

7. Vitre suivant la revendication 6, caractérisée en ce que la bande profilée (2) ou l'encadrement profilé (28, 40) est pourvu d'une pièce métallique insérée (29,41) qui augmente la force de serrage de la section de serrage.

8. Vitre suivant l'une quelconque des revendications 1 à 7, caractérisée en ce que l'encadrement profilé (28) est pourvu intérieurement, dans son âme médiane opposée à la face périphérique de la vitre, d'un creux (27) destiné à recevoir une masse de matière d'étanchéité (26).

9. Vitre suivant l'une quelconque des revendications 1 à 8, caractérisée en ce que l'encadrement profilé (32) présente, dans les zones profilées (33), une dureté plus élevée que dans les autres zones.

10. Vitre suivant l'une quelconque des revendications 1 à 9, caractérisée en ce que, sur la surface de la vitre (36) à coller à l'aile de fixation (46) du cadre de fenêtre d'une carrosserie d'automobile, la garniture (39) est élargie en direction du milieu de la vitre, d'une manière telle que le cordon d'adhésif (45) prévu pour la jonction avec l'aile de fixation s'unisse à cette garniture élargie (39).

## Claims

1. Pane which is provided, at its periphery, with a profiled strip possessing a clamping section having a U-shape in cross-section, the pane being intended, in particular, to be glued to the window frame of an automobile body, characterized in that, in the border zone covered by the U-shaped clamping section of the profiled strip (2, 28, 32, 40), on at least one surface of the pane (1, 11, 21, 36), there is provided an edge-trim (3, 38, 39) having a profiled surface, of a material extrded and hardened directly on the pane, and the U-shaped clamping section of the profiled strip (2, 28, 32, 40) which has a spring elasticity sufficient for the clamping, is equipped, on its surface adjacent to the edge-trim (3, 38, 39), with a profile corresponding to that of the edge-trim (3, 38, 39) in such a manner that a form-fitting assembly is obtained between the profiled flanges of the U-shaped clamping section applied onto the pane and the extruded profiled edge-trim (3, 38, 39).

2. Pane according to Claim 1, characterized in that the profile of the edge-trim (3, 38, 39) adhering permanently to the pane is constituted of at least one rib (5) parallel to the edge of the pane which has approximately a saw tooth shape in cross-section.

3. Pane according to claim 1 or 2, characterized in that the profiles or ribs (5) form back-cuts, behind which engage the corresponding projections of the grooves (9) of the U-shaped clamping section of the profiled strip (2) or of the profiled frame (28, 40).

4. Pane according to Claim 3, characterized in that the edge-trim (3, 38, 39) is made of a polyurethane adhesive such as a single-component polyurethane adhesive hardening in contact with humidity or of a two-component polyurethane adhesive.

5. Pane according to any one of Claims 1 to 4, characterized in that the edge-trim (3, 38, 39) haa a thickness of 0.5 to 2 mm and the profile has a depth of 0.5 to 1.5 mm.

6. Pane according to any one of Claims 1 to 5, characterized in that the profiled strip (2) and the profiled frame (28, 32, 40) are made of a polymer, in particular a rubber polymer such as EPDM.

7. Pane according to Claim 6, characterized in that the profiled strip (2) or the profiled frame (28, 40) is provided with an inserted metal piece (29, 41) which increases the clamping force of the clamping section.

8. Pane according to any one of Claims 1 to 7, characterized in that the profiled frame (28) is provided internally, in its median web opposite the peripheral face of the pane, with a recess (27) intended for receiving a sealing material compound (26).

9. Pans according to any one of Claims 1 to 8, characterized in that the profiled frame (32) possesses, in the profiled zones (33), a hardness higher than in the other zones.

10. Pane according to any one of Claims 1 to 9, characterized in that, on the surface of the pane (36) to be glued to the fixing flange (46) of the window frame of an automobile body, the edge-trim (39) is widened towards the centre of the pane in such a manner that the adhesive cord (45) provided for the junction with the fixing flange is united with this widened edge-trim (39).

**Ansprüche**

1. Glasscheibe, die am Rand mit einer einen im Querschnitt Uförmigen Klemmabschnitt aufweisenden Profilleiste versehen und insbesondere für die Verklebung mit dem Fensterrahmen einer Autokarosserie bestimmt ist, **dadurch gekennzeichnet**, daß in dem von dem U-förmigen Klemmabschnitt der Profilleiste (2,28,32,40) überdeckten Randbereich wenigstens auf einer Oberfläche der Glasscheibe (1,11,21,36) ein Belag (3,38,39) mit profilierter Oberfläche aus einem unmittelbar auf der Glasscheibe extrudierten und ausgehärteten Material vorgesehen ist, und daß der U-förmige Klemmabschnitt der Profilleiste (2,28,32,40), die eine zum Klemmen ausreichende Federelastizität aufweist, auf der an dem Belag (3,38,39) anliegenden Oberfläche mit einer der Profilierung des Belags (3,38,39) entsprechenden Profilierung versehen ist derart, daß zwischen den sich an die Glasscheibe anlegenden profilierten Schenkeln des U-förmigen Klemmabschnitts und dem profilierten Belag (3,38,39) eine Formschlüssige Verbindung gegeben ist.

2. Glasscheibe nach Anspruch 1, dadurch gekennzeichnet, daß die Profilierung des auf der Glasscheibe dauerhaft haftenden Belags (3,38,39) aus wenigstens einer parallel zur Glasscheibenkante verlaufenden Rippe (5) besteht, die im Querschnitt etwa sägezahnförmig ausgebildet ist.

3. Glasscheibe nach Anspruch 1 oder 2, daß die Profilierungen bzw. Rippen (5) HInterschneidungen bilden, hinter die die entsprechenden Vorsprünge der Einschnitte (9) des U-förmigen Klemmabschnitts der Profilleiste (2) bzw. des Profilrahmens (28,40) greifen.

4. Glasscheibe nach Anspruch 3, dadurch gekennzeichnet, daß der Belag (3,38,39) aus einem Polyurethankleber, wie einem feuchtigkeitshärtenden Einkomponenten-Polyurethankleber oder einem Zweikomponenten-Polyurethankleber, besteht.

5. Glasscheibe nach einem oder mehreren der Ansprüche 1 bis 4, dadurch gekennzeichnet, daß der Belag (3,38,39) eine Dicke von 0,5 bis 2 mm, und die Profilierung eine Profiltiefe von 0,5 bis 1,5 mm aufweist.

6. Glasscheibe nach einem oder mehreren der Ansprüche 1 bis 5, dadurch gekennzeichnet, daß die Profilleiste (2) bzw. der Profilrahmen (28,32,40) aus einem Polymeren, insbesondere aus einem kautschukartigen Polymeren wie EPDM, besteht,

7. Glasscheibe nach Anspruch 6, dadurch gekennzeichnet, daß die Profilleiste (2) bzw. der Profilrahmen (28,40) mit einer die Klenmkraft des Klemmabschnitts erhöhenden Metalleinlage (29,41) versehen ist.

8. Glasscheibe nach einem oder mehreren der Ansprüche 1 bis 7, dadurch gekennzeichnet, daß der Profilrahmen (28) innen auf dem der Umfangsfläche der Glasscheibe (21) gegenüberliegenden Mittelsteg mit einer Vertiefung (27) zur Aufnahme einer Dichtmasse (26) versehen ist.

9. Glasscheibe nach einem oder mehreren der Ansprüche 1 bis 8, dadurch gekennzeichnet, daß der Profilrahmen (32) in den profilierten Bereichen (33) eine größere Härte aufweist als in den übrigen Bereichen.

10. Glasscheibe nach einem oder mehreren der Ansprüche 1 bis 9, dadurch gekennzeichnet, daß der Belag (39) auf der mit dem Befestigungsflansch (46) des Fensterrahmens einer Autokarosserie zu verklebenden Oberfläche der Glasscheibe (36) zur Scheibenmitte hin derart verbreitert ist, daß die Kleberraupe (45) für die Verbindung mit dem Befestigungsflansch sich mit diesem verbreiterten Belag (39) verbindet.

*Fig. 1*

Fig. 2

EP 0 248 707 B1

Fig. 3

Fig. 4

43

42

40

41

38

4,5

10

38

4,5

46

37

10

36

37

45

*Fig. 5*

Fig. 6